# EUROPÄISCHE PATENTSCHRIFT

(11) **EP 3 501 925 B1**
(45) Veröffentlichungstag und Bekanntmachung des Hinweises auf die Patenterteilung: **07.06.2023**
(21) Anmeldenummer: 17002069.7
(22) Anmeldetag: 22.12.2017
(51) Int. Cl.: B60T 8/34, B60T 17/06

(54) **HYDRAULISCHE SCHNELLHUBVORRICHTUNG UND VERFAHREN FÜR EINE HYDRAULISCHE SCHNELLHUBVORRICHTUNG**
HYDRAULIC FAST STROKE DEVICE AND METHOD FOR A HYDRAULIC FAST STROKE DEVICE
DISPOSITIF DE LEVAGE RAPIDE HYDRAULIQUE ET PROCÉDÉ POUR UN DISPOSITIF DE LEVAGE RAPIDE HYDRAULIQUE

(43) Veröffentlichungstag der Anmeldung: 26.06.2019
(73) Patentinhaber: Paul Forrer AG, 8962 Bergdietikon (CH)
(72) Erfinder: GUGGISBERG, Erich, 5445 Eggenwil (AG) (CH)
(74) Vertreter: Stulz Messerschmidt, Stephan

(56) Entgegenhaltungen:
- DE-A1- 4 426 348
- FR-A1- 2 874 880

## Beschreibung

### Technisches Gebiet

Die vorliegende Erfindungsbeschreibung betrifft eine hydraulisch wirkende Vorrichtung gemäss der im Anspruch 1 beschriebenen Art und Weise. Des Weiteren betrifft die vorliegende Erfindung ein Verfahren gemäss Anspruch 8, das es ermöglicht, hydraulische Schnellhubfunktionen auszuführen bzw. in einem System zum Voraus definierbare hydraulische Volumenströme kurzfristig bereit zu stellen, welche um im Voraus definierbare Faktoren höher liegen, als der vom eigentlichen hydraulischen System mögliche Volumenstrom. Wird dieser zusätzliche, mögliche Volumenstrom in einem Zylinder mechanisch umgesetzt, so lassen sich daraus sogenannte hydraulische Schnellhubfunktionen realisieren, woraus sich auch die Bezeichnung der vorliegenden Erfindung ableitet.

Solche hydraulischen Schnellhubfunktionen können in zahlreichen technischen Gebieten eingesetzt werden. In der vorliegenden Beschreibung wird die Erfindung beispielhaft im Einsatz in einer hydraulischen Bremsanlage beschrieben.

### Technologischer Hintergrund, Aufgabenstellung

Aus dem Stand der Technik sind verschiedene Bremsvorrichtungen bekannt. Diese reichen von den handbetätigten Bremsen bis zu den modernen Bremssystemen mit mehreren Bremskreisen und bei welchem das Bremssystem des Anhängers mit dem Bremssystem des Zugfahrzeuges kombiniert und verbunden ist.

Aus dem Stand der Technik sind verschiedene Erfindungen bezüglich von Zweileiterbremsen bekannt, so etwa die französische Patentanmeldung 2874880 der Robert Bosch GmbH, oder jene der BENDIX France Société Anonyme (Europäische Patentanmeldung Nr. 0310473).

Aufgrund fortschreitender Technik aber auch zur Gewährleistung und Förderung eines einheitlichen Binnenmarktes sowie der Gewährleistung eines hohen Sicherheitsstandards hat die EU verschiedene Rechtsakte - auch im Bereich von Bremsen - erlassen.

Ein letzter wesentlicher Entwicklungsschritt in dieser Hinsicht war der Erlass der Verordnung 167/2013 vom 5. Februar 2013 über die Genehmigung und Marktüberwachung von land- und forstwirtschaftlichen Fahrzeugen. Die technischen Details bezüglich Bremsen und Bremssystemen wurden mit der delegierten Verordnung EU 2015/68 mit Datum vom 15. Oktober 2014 rechtsverbindlich dekretiert.

Neben der Präzisierung und Ergänzung verschiedener technischer Vorgaben wurde legiferiert, dass neue Fahrzeuge nur noch mit sogenannten Zweileiterbremsen (insbesondere bestehend aus einer Brems- und einer Zusatzleitung) ausgerüstet werden dürfen. Bestehende und immatrikulierte Fahrzeuge dürfen grundsätzlich mit dem bestehenden Bremssystem für eine bestimmte Zeit weiter verwendet werden.

Zweileiterbremsen sind dadurch gekennzeichnet, dass diese über zwei Leitungen verfügen; nämlich eine Steuer- und eine Speiseleitung. Auf dem Markt haben sich Bremssysteme auf Basis von Druckluft und hydraulische Bremsystemse (als Medium wird in der Regel Öl eingesetzt) etabliert. Es hängt von unzähligen Parametern ab, welche Art von Bremssystem (Hydraulik oder Druckluft) zum Einsatz kommt. Baugrösse, Investitionsvolumen, bestehender Maschinenpark, weitere Verwendungsmöglichkeiten der zum Einsatz kommenden Versorgungssysteme etc. sind nur einige davon.

In der oben erwähnten delegierten EU-Verordnung (EU 2015/68 ) sind zahlreiche technische Einzelheiten enthalten, welchen die jeweiligen Bremssysteme zu genügen haben. Anhang III dieser Verordnung beinhaltet die Einzelheiten von Ansprech- und Schwelldauer von Bremssystemen, d.h., in wievielen Bruchteilen von Sekunden die Bremswirkung beim Betätigen der Bremsvorrichtung durch den Fahrer oder die Fahrerin die effektive Bremswirkung einsetzen muss. Bei früher üblichen Bremssystemen war diese Problematik wenig ausgeprägt, da diese technischen Spezifikationen nicht vereinheitlicht und gesetzlich definiert waren. In den verschiedenen Länder bestanden unterschiedliche Gesetzesvorschriften.

Die heute zum Einsatz kommenden Bremsysteme verwenden regelmässig, je nach Hersteller, unterschiedliche Kombinationen von mechanischen, elektrischen, elektronischen und hydraulischen Komponenten, weshalb sich der Gesetzgeber veranlasst sah, insbesondere die Faktoren, welche für die Wirksamkeit von Bremssystemen massgeblich sind, exakt zu definieren. Eine diesbezüglich massgebliche Grösse ist die Zeit, welche zwischen der Betätigung der Bremse durch die Fahrperson und dem vollständigen Druck- bzw. Kraftaufbau in der Bremstrommel verstreicht (sog. Schwell- oder Anschwellzeit). Dabei handelt es sich um wichtige Bruchteile von Sekunden, welche bei jedem einzelnen Bremsmanöver von ausschlaggebender Bedeutung sind.

Gemäss den obgenannten EU-Vorschriften müssen Bremsvorrichtungen insbesondere folgenden Funktionen und Vorschriften genügen:
- Es sind maximal zulässige zeitliche Verzögerungen (sog. Schwell- oder Anschwellzeit) für den Druckaufbau resp. das Einsetzen der Bremswirkung am Anhänger einzuhalten;
- Es ist zwischen Betriebsbrems-, Hilfsbrems- und Parkbremsfunktion zu unterscheiden. Die einzelnen, zu erfüllenden Vorschriften sind spezifisch definiert;
- Die Mindestbremsverzögerung ist je nach Fahrzeugklasse definiert;
- Die Wirksamkeit der Anhängerbremsanlage ist im Zusammenhang mit der Bremswirkung des Zugfahrzeuges und dem Beladungszustand des Anhängers abzustufen.

Vorallem in Einsatzbereichen, wo jeweils verschiedene Zugfahrzeuge für verschiedene Anhängefahrzeuge zum Einsatz gelangen (va. Land- und Forstwirtschaft), stellen die neuen gesetzlichen Vorschriften grosse Herausforderungen dar, da in der Regel nicht alle möglichen Kombinationen von Zugfahrzeug und Anhänger im Voraus definierbar sind und einer Einzelprüfung unterzogen wurden bzw. unterzogen werden können. Das jeweilige Gesamtbremssystem muss allerdings so konzipiert sein, damit es unabhängig von der konkreten Fahrzeugkombination den gesetzlichen Vorgaben genügt.

Aufgrund der Tatsache, dass die Ursache der vorliegenden Erfindung im Erlass neuer Gesetzesbestimmungen liegt und bisher kein Bedarf an entsprechenden Erfindungen bestand, sind auf dem Markt keine entsprechenden Produktelösungen für diese Problemstellung bekannt und es können daher auch keine spezifischen Nachteile der bestehenden Lösungen benannt werden, ausser, dass ein Grossteil der bestehenden Lösungen den neuen gesetzlichen Vorgaben nicht mehr zu genügen vermag.

Soweit ersichtlich sind noch keine erfindungsgemässe Vorrichtungen und Verfahren beschrieben, welche kurzfristig und ohne Einsatz von zusätzlichen aktiven Elementen, wie beispielsweise Pumpen, eine Überbrückung des Bremsspiel resp. des Leerhubes am Bremsaktuator einen schnellen Druckanstieg, wie dieser von Gesetzes wegen gefordert ist, gewährleisten können.

Gleichwohl sind andere Lösungsansätze vorstellbar, wobei diese punkto Zuverlässigkeit, Leistungsfähigkeit, Anzahl verwendeter Bauteile, Verwendungsunversalität, Kosten, Effizienz in der Herstellung und Komplexität die vorliegende, erfindungsgemässe Vorrichtung und das erfindungsgemässe Verfahren wohl nicht überbieten können.

Aufgabe der vorliegenden Erfindung ist es, eine Vorrichtung und Verfahren zu beschreiben, welche in einem hydraulischen System, kurzfristig definierbare hydraulische Volumenströme zur Verfügung stellen kann, um beispielsweise den Leerweg an einem Bremsaktuator wie beispielsweise einen Bremszylinder innerhalb der gesetzlich vorgegeben Zeit zu überbrücken und dadurch den gesetzlich vorgebenen Druckanstieg am Bremszylinder zu genügen.

Aufgabe der vorliegenden Erfindung ist es zudem, mehrere (Brems-) Vorgänge kurzfristig hintereinander zu ermöglichen, ohne dass die Funktionalität der erfindungsgemässen Vorrichtung abnimmt oder das Bremssystem eingeschränkt wird.

Vor dem eingangs erwähnten gesetzlichen Hintergrund ist es zudem Aufgabe der vorliegenden Erfindung, eine einfache und zugleich technisch zuverlässige Vorrichtung und ein Verfahren zu beschreiben, welche es ermöglichen, einzelne oder mehrere Anhängefahrzeuge mit einer hydraulischer Bremsanlage an das Bremssystem des Zugfahrzeuges unter Einhaltung der gesetzlichen Vorgaben zu koppeln, ohne dass zusätzliche aktive Elemente wie Pumpen oder Motoren etc. eingesetzt werden müssen.

Zugleich ist es Aufgabe der in der vorliegenden Erfindung beschriebenen Vorrichtung auch bei grösseren Anhängerfahrzeugen mit mehreren Achsen und/oder grossvolumigeren Bremsaktuatoren die gesetzlich geforderten Werte zu erreichen.

Ferner ist es Aufgabe der vorliegenden Erfindung, eine Vorrichtung zu beschreiben, bei welcher in einem hydraulischen System kurzfristige Volumennachfragespitzen abzudecken, welche über dem maximalen Volumenstrom der Versorgungsquelle liegt.

### Darstellung des Gegenstandes der vorliegenden Erfindung

Mit der vorliegenden Erfindung wird eine Vorrichtung und ein Verfahren beschrieben, womit es ermöglicht wird, dass ein Anhänger mit hydraulischer Anhängerbremse, unabhängig von der Grösse, des Betätigungsweges oder der Anzahl der installierten Bremsaktuatoren, ausgerüstet und betrieben werden kann. Die erfindungsgemässe Vorrichtung ist derart ausgeführt, dass die Ansprechzeit, respektive die Hubgeschwindikeit bzw. die Druck-Aufbauzeit an den einzelnen Bremsaktuatoren sowie vom Fördervolumen des gekoppelten Zugfahrzeuges unabhängig sind. Die erfindungsgemässe Vorrichtung bzw. das Verfahren eignet sich daher insbesondere für den Einsatz an Anhängerfahrzeugen, welche mit ganz unterschiedlichen Zugfahrzeugen und zusätzlichen Anhängerkombinationen eingesetzt werden.

Die vorliegende Erfindung beschreibt eine Vorrichtung und ein Verfahren, das in der Lage ist, bei einem Anhänger, egal ob ein "altes" hydraulisches Einleiterbremssystem oder ein nach der aktuellsten EU-Verordnung konzipiertes hydraulisches Zweileiterbremssystem vorhanden ist, die gesetzliche Vorgaben zu erfüllen.

### Kurzbeschreibung der Figuren

Die erfindungsgemässe Vorrichtung wird nachfolgend und beispielhaft anhand ausgewählter, in der Zeichnung dargestellter Ausführungsbeispiele näher erläutert. Im Einzelnen zeigen
**Fig. 1****:** Prinzipschaltschema (hydraulisch)
**Fig. 2****:** Anordnung der erfindungsgemässen Vorrichtung bei einem Anhänger
**Fig. 3****:** Messungen von charakteristischer Anschwellzeit konventionell/mit Schnellhubventil

### Ausführungsbeispiele: Beschrieb der verschiedenen Komponenten der erfindungsgemässen Vorrichtung

Die erfindungsgemässe Vorrichtung besteht aus einer Anordnung von Rückschlagventilen, Leitungen und Anschlüssen. Die Bezeichnungen am Rückschlagventil sind nachfolgend wiedergegeben (Bezeichnungen am Rückschlagventil).

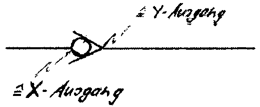

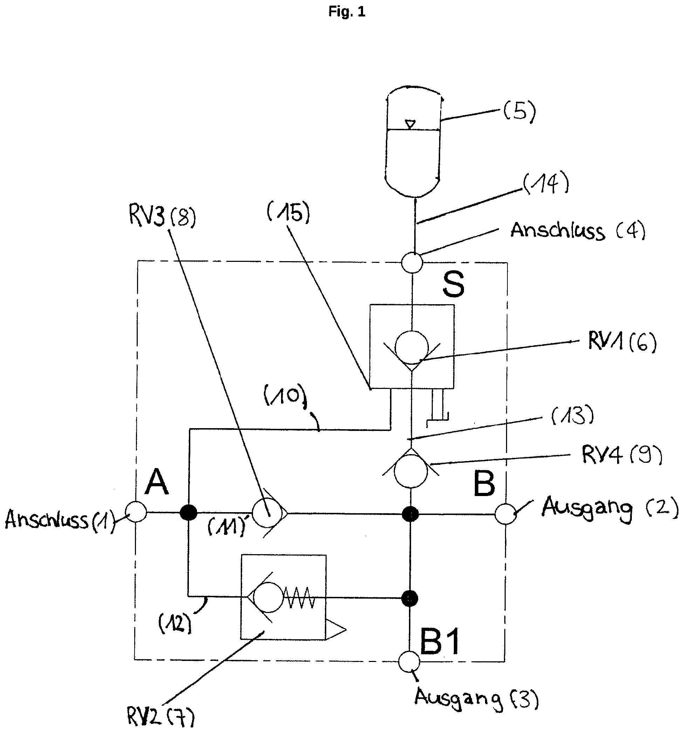

In einer vorteilhaften einfachen Ausführungsform umfasst die erfindungsgemässe Vorrichtung, welche alle in einem einzigen Element kompakt untergebracht sind, folgende Komponenten, Leitungen und Anschlüsse (vgl. Fig. 1) :
- einen Anschluss 1, an welchem die Bremsdruckleitung angeschlossen wird (vgl. Position A);
- einen Ausgang 2 und 3, welche mit dem Bremszylinder verbunden ist (vgl. Position B und B1);
- einen Anschluss 4, welcher via einer Speicherleitung 14 mit einem Speicher 5 verbunden ist;
- ein angesteuertes Rückschlagventil 6, zur Ladung und Entladung des Speichers 5
- ein weiteres Rückschlagverntil 7, mit einer gelüfteter Federvorspannung;
- ein weiteres Rückschlagventil 8, für den schnellen Druckabbau am Aktuator
- ein weiteres Rückschlagventil 9;
- eine Steuerleitung 10;
- eine Rücklaufleitung 11;
- eine Ansteuerleitung 12;
- eine Füllleitung 13;
- eine Speicherleitung 14 und
- einen Pilotanschluss 15

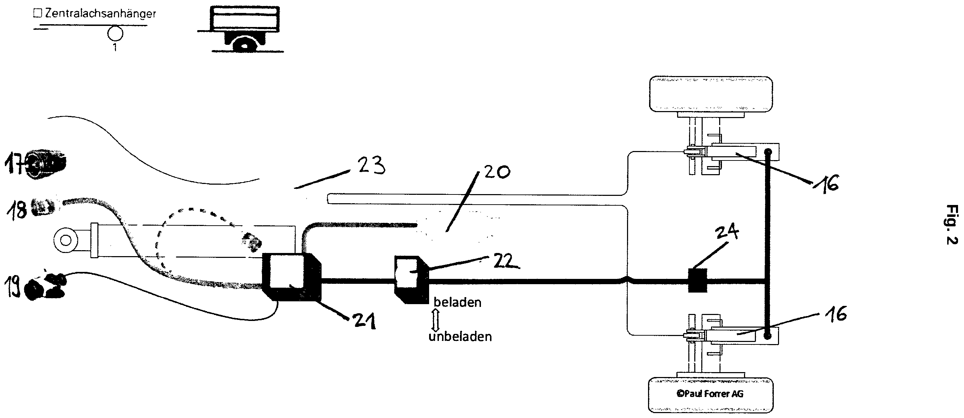

**In** **Fig. 2** ist die Anordnung und Integration der erfindungsgemässen Vorrichtung bei einem Anhänger mit folgenden Komponenten:
- einem Bremszylinder 16;
- einer Bremsleitung 17;
- einer Zusatzleitung 18;
- einer Steckdose nach ISO 7638-2;
- einem Hydrospeicher 20;
- einem Notbremsventil 21;
- einer automatischen Lastanpassungsvorrichtung 22;
- einer Feststellbremse 23;
- einer Schnellhubvorrichtung bzw. Erfindungsgemässe Vorrichtung (24).
dargestellt.

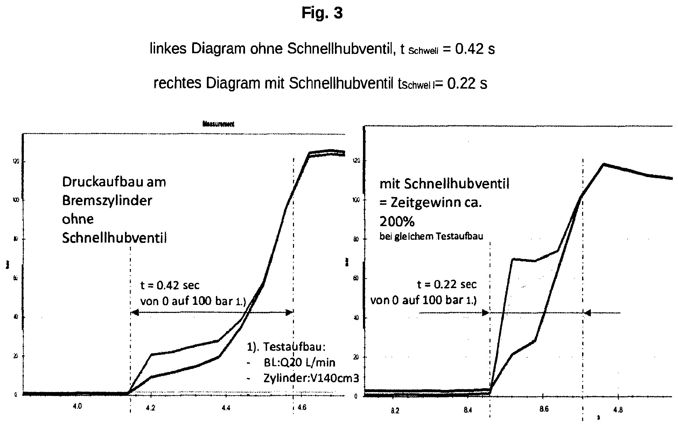

**Fig. 3** zeigt den Verlauf des Druckaufbaus an einem Bremszylinder mit und ohne die erfindungsgemässe Vorrichtung.

Die Funktionsweise und das Zusammenwirken der obigen Komponenten wird nachfolgend anhand der verschiedenen Betriebszustände beschrieben.

### Beschrieb der verschiedenen Betriebszustände (hydraulischer Beschrieb)

**Ruhezustand / Funktionsbereitschaft erstellen:** Bei der ersten Betätigung der Bremsanlage am Zugfahrzeug nach dem Anschliessen der erfindungsgemässen Vorrichtung an das Gesamtsystem, wird der Anschluss 1 mit dem Druckmedium beaufschlagt und der Speicher 5 via dem Anschluss 4 bis zu einem vom Gesamtsystem vorgegebenen Druck aufgeladen, entsprechend dem hydraulischen Funktionsschema in **Fig. 1****.** Nach Beendigung dieses Aufladevorganges verfügt der Speicher 5 über eine vorbestimmte Menge des Druckmediums mit einem vordefinierten Druck, welcher entsprechend der vorliegenden erfindungsgemässen Vorrichtung zur kurzfristigen Überbrückung des jeweiligen Leerweges eines Bremszylinders (nicht dargestellt) am Ausgang 2 oder 3 jederzeit zur Verfügung steht.

**Fahrtzustand / Bremse entlastet:** Solange durch die am Anschluss 1 angeschlossene Bremsleitung kein Druck aufgebaut wird, ist keine Bremsfunktion aktiv. Ein allfälliger Druck an den Ausgängen 2 und 3 (hervorgerufen durch die Federrückstellkraft an den Bremsaktuatoren) kann sich nicht aufbauen, da dieser über das Rückschlagventil 8 entlastet wird.

Die Bremsen sind dadurch komplett gelöst. Der am Anschluss 4 herrschende Druck vom angeschlossenen Speicher 5 wird leckagefrei von einem entsperrbaren Rückschlagventil 6 isoliert und dauerhaft zurückgehalten.

### Fahrzustand: Bremsvorgang, Phase 1 (Niederdruckbereich, Überwindung Leerweg am Bremszylinder):

Mit dem Drücken des Bremspedals erfolgt ein Druckaufbau in der Bremsleitung, welche am Anschluss 1 der erfindungsgemässen Vorrichtung angeschlossen ist. Dieser Druckimpuls wird über die Steuerleitung 10 zum Pilotanschluss 15 des entsperrbarem Rückschlagventils 6 geleitet, wodurch sich das Rückschlagventil 6 öffnet und die im Speicher 5 vorhandene Druck- und Fördermenge in Richtung Ausgang 2 und 3 entleert und damit gleichzeitig der Leerweg der Bremszylinder überbrückt wird.

Zum technischen Verständnis sei erwähnt, dass das Rückschlagventil 6 unterschiedliche Kontaktflächen am Y- und X-Ausgang aufweist, sodass beispielweise mit einem Druck von 8 bar in der Steuerleitung 10, das Rückschlagventil 6 geöffnet werden kann, wenn am Anschluss 4 ein Druck von beispielsweise 80 bar herrscht.

In den bestehenden Bremssystemen haben sich Kontaktflächenverhältnisse von Y und X am Rückschlagventil 6 von 1:8 bis 12 als besonders vorteilhaft und betriebssicher erwiesen. Andere Verhältnisse sind durch die üblichen konstruktiven Vorkehrungen ebenfalls denkar und möglich.

Der oben erwähnte Vorgang geht in in Bruchteilen von Sekunden vonstatten und wird nur durch die Leitungsquerschnitte und Durchflusswiderstände limitiert. Sobald der Leerweg an allen angeschlossenen Bremszylindern überbrückt ist, erhöht sich der Druck kontinuerlich, wodurch die direkte Verbindung zwischen Anschluss 4 und den Anschlüssen 2 und 3 über das Rückschlagventil 9 geschlossen wird. Die Speicherentladung des Speichers 5 bzw. die Ueberwindung des Leerweges am Bremszylinder ist abgeschlossen. Es folgt der weitere Druckaufbau am Anschluss 1 via der Ansteuerleitung 12 auf die Anschlüsse 2 und 3.

### Fahrzustand: Bremsvorgang Phase 2 (Hochdruckbereich, Aufbau Bremsdruck)

Der weitere Druckaufbau an den Bremszylindern bzw. an den Ausgängen 2 und 3 erfolgt nicht mehr über die Entleerung des Speichers 5, sondern über die Ansteuerleitung 12. Der am Anschluss 1 eingespiesene, steigende Bremsdruck wird direkt an die hydraulischen Aktuatoren weitergeleitet. Dank der Tatsache, dass für den weiteren Druckaufbau am Bremszylinder nur noch minimale Fördervolumen benötigt werden, wird das überschüssige Volumen via der Steuerleitung 10 zum Nachfüllen des Speichers 5 verwendet.

### Fahrzustand: Bremsvorgang Phase 3 (Hochdruckbereich, Aufrechterhalten des Bremsdrucks)

Solange das Bremspedal von der Führerperson betätigt ist, wird der entsprechende Druck am Anschluss 1 aufrechthalten und die Ausgänge 2 und 3 mit dem entsprechenden Druck beaufschlagt. In dieser Phase kann sich der Speicher 5 via der Steuerleitung 10 kontinuerlich aufladen.

### Fahrzustand: Bremsvorgang Phase 4 (Bremse lösen, Bremsdruck absenken)

Sobald der Bremsvorgang beendet wird, senkt sich der Druck am Anschluss 1 und via Rückschlagventil 8 baut sich parallel der Druck im Bremszylinder ab. Der entsprechende Volumenstrom fliesst - verursacht durch die Rückstellfedern an den Bremsen (nicht dargestellt) - in den Vorratstank zurück.

Das Nachladen des Speichers 5 erfolgt in der beispielhaft dargestellten Ausführungsform über die Steuerleitung 10; durch den Pilotanschluss fliesst bei genügendem Druckgefälle ein limitierter Oelstrom Richtung Speicher.

Die rein hydraulische Wirkungsweise der erfindungsgemässen Vorrichtung lässt sich in Fig. 3 ablesen. Fig. 3 zeigt die Resultate einer Messreihe an einer konventionellen Bremsvorrichtung sowie die Messresultate mittels Einsatz der erfindungsgemässen Vorrichtung.

Bei der Messung an einer konventionellen Bremsanlage steigt der Druck am Anschluss 1 und an den Anschlüssen 2 bzw. 3 gleichmässig und paralell an. Die massgebliche Anschwellzeit beträgt 0.42 sec.

Mit dem Einsatz der erfindungsgemässen Vorrichtung steigt der Druck wegen des Entleeren des Speichers 5 an den Anschlüssen 2 und 3 beinahe in der halben Zeit auf denselben Druck an, indem die Phase 2 bedeutend kürzer ausfällt und sobald die Speicherentleerung beendet ist, Phase 3 beginnt.

### Bezugszeichenliste

- 1: Anschluss, Eingang A, Anschlussleitung
- 2: Ausgang B, zu Bremsezylinder 1
- 3: Ausgang B1 zu Bremszylinder 2
- 4: Anschluss S zum Speicher
- 5: Speicher
- 6: Rückschlagventil RV1, entsperrbar,
- 7: Rückschlagventil RV2, mit gelüftetem Federraum
- 8: Rückschlagventil RV3
- 9: Rückschlagventil RV4
- 10: Steuerleitung
- 11: Rücklaufleitung
- 12: Ansteuerleitung
- 13: Füllleitung
- 14: Speicherleitung
- 15: Pilotanschluss
- 16: Bremszylinder
- 17: Bremsleitung
- 18: Zusatzleitung
- 19: Steckdose ABS
- 20: Hydrospeicher
- 21: Notbremsventil
- 22: automatischen Lastanpassungsvorrichtung
- 23: Feststellbremse
- 24: Schnellhubvorrichtung

## Patentansprüche

1. **Vorrichtung,** umfassend mindestens einen ersten Anschluss (1), einen zweiten Anschluss (4) sowie einen ersten Ausgang (2) und einen zweiten Ausgang (3), dadurch gekennzeichnt, dass
(a) der erste Anschluss (1) aa) mittels einer Steuerleitung (10) über einen Pilotanschluss (15) mit einem ersten Rückschlagventil (6) sowie bb) via einer Rücklaufleitung (11) mit einem zweiten Rückschlagventil (8) und cc) mittels einer Ansteuerleitung (12) mit einem dritten Rückschlagventil (7) wirkverbunden ist;
(b) der Y-Ausgang des zweiten Rückschlagventils (8) mit dem X-Ausgang eines vierten Rückschlagventils (9) sowie mit dem ersten Ausgang (2) und dem zweiten Ausgang (3) und gleichzeitig mit dem X-Ausgang des dritten Rückschlagventils (7) wirkverbunden ist;
(c) der Y-Ausgang des vierten Rückschlagventils (9) mit dem Y-Ausgang des ersten Rückschlagventils (6) mittels einer Fülleitung (13) wirkverbunden ist;
(d) der X-Ausgang des ersten Rückschlagventils (6) mit dem zweiten Anschluss (4) und dieser über eine Speicherleitung (14) mit einem Speicher (5) wirkverbunden ist.
(e) der erste Anschluss (1) mit einer Bremsleitung (17) und der erste Ausgang (2) sowie der zweite Ausgang (3) mit einem Bremszylinder (16) verbindbar sind.

2. Vorrrichtung gemäss Anspruch 1, **dadurch gekennzeichnet, dass** der Speicher (5) als Hydrospeicher ausgeführt wird.

3. Vorrichtung gemäss einem der vorstehenden Ansprüche, **dadurch gekennzeichnet, dass** am zweiten Anschluss (4) mehrere Speicher (5) in Serie oder parallel via einer Speicherleitung (14) angeschlossen werden können.

4. Vorrichtung gemäss einem der vorstehenden Ansprüche, **dadurch gekennzeichnet, dass** am ersten Ausgang (2) oder am zweiten Ausgang (3) weitere Bremszylinder (16) in Serie oder parallel angeschlossen werden können.

5. Vorrichtung gemäss einem der vorstehenden Ansprüche, **dadurch gekennzeichnet, dass** das dritte Rückschlagventil (7) als federvorgespanntes und belüftetes Rückschlagventil ausgeführt ist und die Federvorspannkraft individuell so eingestellt wird, damit das mit Druck vom Speicher (5) beaufschlagte erste Rückschlagventil (6) bei einem Druckaufbau in der Steuerleitung (10) bzw. Ansteuerleitung (12) zuerst geöffnet wird.

6. Vorrichtung gemäss einem der vorstehenden Ansprüche, **dadurch gekennzeichnet, dass** das dritte Rückschlagventile (7) bzw. das erste Rückschlagventil (6) manuell, mechanisch, elektrisch oder hydraulisch betätigt/angesteuert werden können.

7. Vorrichtung gemäss einem der vorstehenden Ansprüche, **dadurch gekennzeichnet, dass** die am ersten Rückschlagventil (6) vorhandenen Kontaktflächenverhältnisse zwischen dem X- und Y-Anschluss des Rückschlagventils ein vordefiniertes Verhältnis von 1 zu 5 - 15 aufweisen, womit bei einem Druck von 1 bar am Pilotanschluss (15) das erste Rückschlagventil (6) mit einem Gegendruck von 5 - 15 bar am zweiten Anschluss (4) geöffnet wird.

8. **Verfahren** zur Verwendung der Vorrichtung nach einem der Ansprüche 1 - 7 zur Ausführung von Schnellhüben, **dadurch gekennzeichnet, dass**
(a) bei einem Druckanstieg am ersten Anschluss (1) via einer Steuerleitung (10) in *einer ersten Phase* mittels des ersten Rückschlagventils (6) ein zuvor geladener Speicher (5) sich über über den ersten Ausgang (2) und den zweiten Ausgang (3), welche mit den Bremszylindern (16) verbunden sind, sofort und kurzfristig entleert und
(b) in *einer zweiten Phase* bei weiterem Druckanstieg am ersten Anschluss (1) das dritte Rückschlagventil (7) geöffnet wird, sodass in der zweiten Phasen der weitere Druckaufbau zum ersten Ausgang Ausgang (2) und zum zweiten Ausgang (3), welche mit den Bremszylinder (16) verbunden sind, direkt über das dritte Rückschlagventil (7) erfolgt und gleichzeitig der Speicher (5) über die Steuerleitung (10) wieder aufgeladen wird und
(c) in *einer dritten Phase* bei einem Druckabfall am ersten Anschluss (1) die Bremszylinder (16) via dem zweiten Rückschlagventil (8) entladen.

9. Verfahren gemäss dem vorstehenden Anspruch, **dadurch gekennzeichnet, dass** die sofortige und kurzfristige Entleerung des Speichers (5) auf beliebige Aktuatoren erfolgen kann.

## Claims

1. A **device,** comprising at least a first connection (1), a second connection (4) as well as a first outlet (2) and a second outlet (3), **characterized in that**
(a) the first connection (1) is operatively connected aa) by means of a control line (10) via a pilot connection (15) to a first check valve (6) as well as bb) via a return line (11) to a second check valve (8) and cc) by means of an actuation line (12) to a third check valve (7);
(b) the Y-outlet of the second check valve (8) is operatively connected to the X-outlet of a fourth check valve (9) as well as to the first outlet (2) and the second outlet (3) and simultaneously to the X-outlet of the third check valve (7);
(c) the Y-outlet of the fourth check valve (9) is operatively connected to the Y-outlet of the first check valve (6) by means of a filling line (13);
(d) the X-outlet of the first check valve (6) is operatively connected to the second connection (4) and the latter is operatively connected via an accumulator line (14) to an accumulator (5);
(e) the first connection (1) is connected to a brake line (17) and the first outlet (2) and the second outlet (3) are connectable to a brake cylinder (16).

2. The device according to Claim 1, **characterized in that** the accumulator (5) is embodied as a hydraulic accumulator.

3. The device according to any one of the preceding claims, **characterized in that** multiple accumulators (5) can be connected in series or in parallel via an accumulator line (14) at the second connection (4).

4. The device according to any one of the preceding claims, **characterized in that** further brake cylinders (16) can be connected in series or in parallel at the first outlet (2) or at the second outlet (3).

5. The device according to any one of the preceding claims, **characterized in that** the third check valve (7) is embodied as a spring-biased and ventilated check valve and the spring biasing force is adjusted individually such that the first check valve (6) supplied with pressure by the accumulator (5) is first opened during a pressure build-up in the control line (10) or actuation line (12).

6. The device according to any one of the preceding claims, **characterized in that** the third check valve (7) or the first check valve (6) can be operated/actuated manually, mechanically, electrically or hydraulically.

7. The device according to any one of the preceding claims, **characterized in that** the contact surface ratios present at the first check valve (6) between the X-connection and the Y-connection of the check valve have a predefined ratio of 1 to 5 - 15, with which the first check valve (6) is opened with a counter pressure of 5 -15 bar at the second connection (4) when the pressure at the pilot connection (15) is 1 bar.

8. A **method** for use of the device according to any one of Claims 1 - 7 for executing fast strokes, **characterized in that**
(a) during a pressure increase at the first connection (1) via a control line (10), a previously charged accumulator (5) empties immediately and quickly via the first outlet (2) and the second outlet (3), which are connected to the brake cylinders (16), in *a first phase* by means of the first check valve (6), and
(b) in *a second phase* during a further increase in pressure at the first connection (1), the third check valve (7) is opened so that in the second phase the further pressure build-up to the first outlet (2) and to the second outlet (3), which are connected to the brake cylinder (16), is carried out directly via the third check valve (7) and, simultaneously, the accumulator (5) is charged again via the control line (10), and
(c) in *a third phase* during a pressure drop at the first connection (1), the brake cylinders (16) discharge via the second check valve (8).

9. The method according to the preceding claim, **characterized in that** the immediate and quick emptying of the accumulator (5) can be carried out on any actuators.

## Revendications

1. **Dispositif,** comprenant au moins un premier raccord (1), un deuxième raccord (4) ainsi qu'une première sortie (2) et une deuxième sortie (3), **caractérisé en ce que**
(a) le premier raccord (1) aa) est fonctionnellement relié à un premier clapet anti-retour (6) à l'aide d'une conduite de commande (10) par le biais d'un raccord pilote (15) et bb) à un deuxième clapet anti-retour (8) par le biais d'une conduite de retour (11) ainsi que cc) à un troisième clapet anti-retour (7) à l'aide d'une conduite d'activation (12) ;
(b) la sortie Y du deuxième clapet anti-retour (8) est fonctionnellement reliée à la sortie X d'un quatrième clapet anti-retour (9) ainsi qu'à la première sortie (2) et à la deuxième sortie (3) et en même temps à la sortie X du troisième clapet anti-retour (7) ;
(c) la sortie Y du quatrième clapet anti-retour (9) est fonctionnellement reliée à la sortie Y du premier clapet anti-retour (6) à l'aide d'une conduite de remplissage (13) ;
(d) la sortie X du premier clapet anti-retour (6) est fonctionnellement reliée à au deuxième raccord (4) et celui-ci par le biais d'une conduite de réservoir (14) à un accumulateur (5) ;
(e) le premier raccord (1) peut être relié à une conduite de frein (17) et la première sortie (2) ainsi que la deuxième sortie (3) peuvent être reliées au cylindre de frein (16).

2. Dispositif selon la revendication 1, **caractérisé en ce que** l'accumulateur (5) est réalisé sous la forme d'un accumulateur hydraulique.

3. Dispositif selon l'une quelconque des revendications précédentes, **caractérisé en ce que**, au niveau du deuxième raccord (4), peuvent être raccordés plusieurs accumulateurs (5) en série ou parallèle par le biais d'une conduite de réservoir (14).

4. Dispositif selon l'une quelconque des revendications précédentes, **caractérisé en ce que**, au niveau de la première sortie (2) ou de la deuxième sortie (3), peuvent être raccordés d'autres cylindres de frein (16) en série ou parallèle.

5. Dispositif selon l'une quelconque des revendications précédentes, **caractérisé en ce que** le troisième clapet anti-retour (7) est réalisé sous la forme d'un clapet anti-retour ventilé et précontraint par un ressort et la force de précontrainte de ressort est réglée individuellement afin que le premier clapet anti-retour (6) sollicité par la pression de l'accumulateur (5) soit d'abord ouvert suite à une montée de pression dans la conduite de commande (10), ou dans la conduite d'activation (12).

6. Dispositif selon l'une quelconque des revendications précédentes, **caractérisé en ce que** le troisième clapet anti-retour (7) ou le premier clapet anti-retour (6) peuvent être actionnés/commandés manuellement, mécaniquement, électriquement ou hydrauliquement.

7. Dispositif selon l'une quelconque des revendications précédentes, **caractérisé en ce que** les rapports de surfaces de contact présents au niveau du premier clapet anti-retour (6) entre le raccord X et Y du clapet anti-retour présentent un rapport prédéfini compris entre 1 et 5 à 15, ce qui permet, dans le cas d'une pression de 1 bar au niveau du raccord pilote (15), que le premier clapet anti-retour (6) s'ouvre avec une contrepression de 5 à 15 bar au niveau du deuxième raccord (4).

8. **Procédé** destiné à utiliser le dispositif selon une des revendications 1 à 7 pour réaliser des levages rapides, **caractérisé en ce que**
(a) lors d'une montée en pression au niveau du premier raccord (1) par le biais d'une conduite de commande (10) *dans une première phase* à l'aide du premier clapet anti-retour (6) un accumulateur (5) préalablement chargé se vide immédiatement et en un temps très court par le biais de la première sortie (2) et de la deuxième sortie (3), lesquelles sont reliées aux cylindres de frein (16), et
(b) *dans une deuxième phase* lors d'une nouvelle montée en pression au niveau du premier raccord (1) le troisième clapet anti-retour (7) s'ouvre, de telle sorte que, dans la deuxième phase, la nouvelle montée en pression vers la première sortie (2) et vers la deuxième sortie (3), lesquelles sont reliées aux cylindres de frein (16), s'effectue directement par le biais du troisième clapet anti-retour (7) et en même temps l'accumulateur (5) est de nouveau rechargé par le biais de la conduite de commande (10) et
(c) *dans une troisième phase* lors d'une chute de pression au niveau du premier raccord (1) les cylindres de frein (16) sont déchargés par le biais du deuxième clapet anti-retour (8).

9. Procédé selon la revendication précédente, **caractérisé en ce que** la vidange immédiate et dans un temps très court de l'accumulateur (5) peut se faire sur n'importe quels actionneurs.
